# EUROPEAN PATENT APPLICATION

(11) **EP 3 832 751 A1**
(43) Date of publication of application: **09.06.2021**
(21) Application number: 19843504.2
(22) Date of filing: 26.07.2019
(51) Int. Cl.: H01M 2/10

(54) **CELL MODULE FIXING STRUCTURE**

(30) Priority: 31.07.2018 JP 2018144110
(71) Applicant: SANYO Electric Co., Ltd., Daito-shi Osaka 574-8534 (JP)
(72) Inventor: HARAZUKA, Kazuhiro, Osaka-shi, Osaka 540-6207 (JP); MITSUBORI, Shinichi, Osaka-shi, Osaka 540-6207 (JP)
(74) Representative: Vigand, Philippe
(86) International application number: PCT/JP2019/029348
(87) International publication number: WO 2020/026966

(57) **Abstract**

In order to fix a cell module more stably, fixing structure (4) of cell module (2) is fixing structure (4) of cell module (2), cell module (2) including: cell stack (6) with a plurality of cells (12) stacked; a pair of end plates (8) that are disposed at both ends of cell stack (6) as viewed in stacking direction X of cells (12); and restraint member (10) that engages with the pair of end plates (8) to sandwich the plurality of cells (12). Fixing structure (4) includes: fixing portion (30) that fixes cell module (2) to fixing object (28) to which cell module (2) is to be fixed; and reduction mechanism (32) that reduces a stress generated on fixing portion (30) due to a dimensional change of cells (12).

## Description

### TECHNICAL FIELD

The present invention relates to a cell module fixing structure.

### BACKGROUND ART

For example, as a power source that requires a high output voltage, such as for a vehicle, there is known a cell module having a structure in which a plurality of cells is connected in series. For example, PTL 1 discloses a cell module that includes: a cell stack containing a plurality of stacked cells; a pair of end plates that is disposed at both ends of the cell stack as viewed in the cell stacking direction; and a fixing bar that is laid across the pair of end plates and constrains the plurality of cells in the stacking direction.

Further, according to PTL 1, the cell module is fixed to a vehicle body by an L-shaped fixing plate. Specifically, one end side of the fixing plate is connected to the central portion of the end plate, and the other end side is fixed to the vehicle body.

### Citation List

### Patent Literature

PTL 1: Unexamined Japanese Patent Publication No. 2013-8524

### SUMMARY OF THE INVENTION

### Technical problem

So far, sufficient studies have not been made on the structure for stably fixing the cell module. As a result of intensive research on cell module fixing structure, the present inventors have come to recognize that the conventional fixing structure has room for improvement in fixing a cell module more stably.

The present invention has been made in view of these circumstances, and an object of the present invention is to provide a technique for fixing a cell module more stably.

### Solution to problem

One aspect of the present invention is a cell module fixing structure. This fixing structure is a fixing structure of a cell module, the cell module including: a cell stack having a plurality of cells stacked; a pair of end plates that are disposed at both ends of the cell stack as viewed in a stacking direction of the cells; and a restraint member that engages with the pair of end plates to sandwich the plurality of cells. The fixing structure includes: a fixing portion that fixes the cell module to a fixing object to which the cell module is to be fixed; and a reduction mechanism that reduces a stress generated on the fixing portion due to a dimensional change of the cells.

Any combinations of the above components and any modifications of features of the present invention in methods, devices, systems and the like are still effective as other aspects of the present invention.

### Advantageous effect of invention

According to the present invention, it is possible to fix the cell module more stably.

### BRIEF DESCRIPTION OF DRAWINGS

FIG. 1 is a perspective view of a power supply device according to a first exemplary embodiment.
FIG. 2 is an exploded perspective view of the power supply device.
FIG. 3 is a diagram showing results of calculation, by simulation, of distribution of stress generated in an end plate and a bind bar due to expansion of cells.
FIG. 4(A) is a perspective view of a fixing portion included in a fixing structure according to a second exemplary embodiment. FIG. 4(B) is a perspective view showing a state in which the fixing portion according to the second exemplary embodiment is connected to the restraint member.
FIG. 5 is a perspective view of a fixing portions included in a fixing structure according to a third exemplary embodiment.

### DESCRIPTION OF EMBODIMENTS

Hereinafter, the present invention will be described with reference to the drawings based on preferred exemplary embodiments. The exemplary embodiments are not intended to limit the invention but are intended for exemplification, and all the features and combinations thereof described in relation to the exemplary embodiments are not necessarily essential to the invention. The same or equivalent constituent elements, members, and processes shown in the drawings are denoted by the same reference numerals, and duplicated description thereof will be appropriately omitted. The scales and shapes of parts shown in the drawings are set for convenience in order to facilitate explanation, and should not be limitedly interpreted unless otherwise specified. When terms such as "first" and "second" are used in the present specification or claims, these terms do not represent any order or importance unless otherwise specified, but are intended to distinguish between a certain configuration and another. In the drawings, some of the members that are not important for explaining the exemplary embodiments are omitted.

### (First exemplary embodiment)

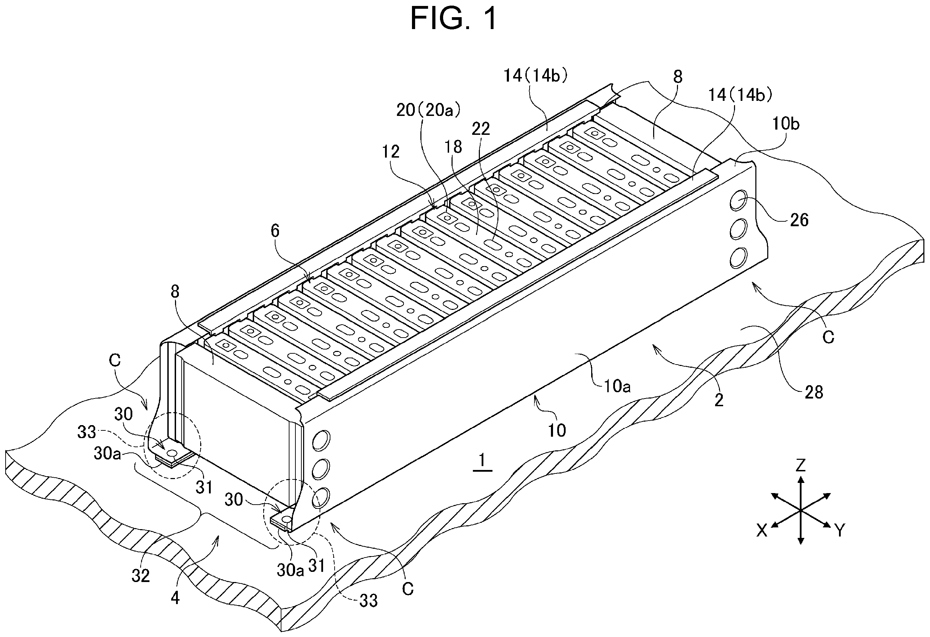

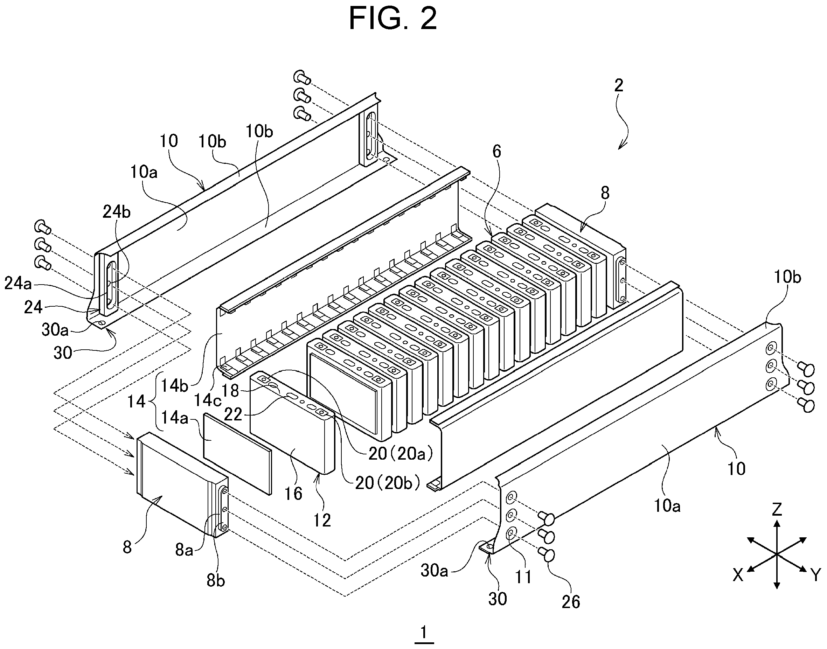

FIG. 1 is a perspective view of a power supply device according to a first exemplary embodiment. FIG. 2 is an exploded perspective view of the power supply device. Power supply device 1 includes cell module 2 and fixing structure 4. Cell module 2 mainly includes cell stack 6, a pair of end plates 8, and restraint member 10.

Cell stack 6 has a plurality of cells 12 and separator 14. Each cell 12 is a rechargeable secondary cell such as a lithium-ion cell, a nickel-hydrogen cell, or a nickel-cadmium cell. Cell 12 is a so-called square cell, and has outer can 16 of a flat rectangular parallelepiped shape. A substantially rectangular opening (not shown) is provided on one surface of outer can 16, and an electrode body, an electrolytic solution, and the like is housed in outer can 16 via the opening. Sealing plate 18 for sealing outer can 16 is provided at the opening of outer can 16.

Sealing plate 18 has positive electrode output terminal 20 provided near one end and has negative electrode output terminal 20 provided near the other end, as viewed in the longitudinal direction. Hereinafter, positive electrode output terminal 20 will be called positive terminal 20a, and negative electrode output terminal 20 will be called negative terminal 20b. When it is not necessary to distinguish polarities of output terminal 20, positive terminal 20a and negative terminal 20b are collectively called output terminals 20. Outer can 16, sealing plate 18, and output terminals 20 are conductors, for example, made of metal.

In the present exemplary embodiment, a side on which sealing plate 18 is provided is on a top surface of cell 12, and the opposite side is on a bottom surface of cell 12. Cell 12 has two main surfaces connecting the top surface and the bottom surface. These main surfaces are the surfaces having the largest area among six surfaces of cell 12. The two surfaces other than the top surface, bottom surface, and two main surfaces shall be side surfaces of cell 12. A top surface side of cell 12 is on a top surface of cell stack 6, a bottom surface side of cell 12 is on a bottom surface of cell stack 6, and side surface sides of cell 12 are on side surfaces of cell stack 6. For convenience, a top surface side of cell stack 6 is upward in a vertical direction, and a bottom surface side of cell stack 6 is downward in the vertical direction.

Safety valve 22 is provided between the pair of output terminals 20 on sealing plate 18. Safety valve 22 is configured to open when an internal pressure of outer can 16 rises above a predetermined value so as to release the gas inside. Safety valve 22 of each cell 12 is connected to a gas duct (not shown), and the gas inside the cell is discharged from safety valve 22 into the gas duct.

The plurality of cells 12 is stacked at predetermined intervals such that the main surfaces of adjacent cells 12 face each other. The term "stacking" means arranging a plurality of members in any one direction. Therefore, stacking cells 12 also includes arranging a plurality of cells 12 horizontally. Each cell 12 is disposed such that output terminals 20 face the same direction (here, for convenience, upward in the vertical direction). Two adjacent cells 12 are stacked such that one's positive terminal 20a and the other's negative terminal 20b are adjacent to each other. Positive terminal 20a and negative terminal 20b are electrically connected via a bus bar not shown. In some cases, output terminals 20 having the same polarity in the plurality of adjacent cells 12 may be connected in parallel by the bus bar to form cell blocks, and the cell blocks may be connected in series.

Separator 14 is also called insulating spacer, and is made of, for example, a resin having insulation properties. Examples of the resin constituting separator 14 include thermoplastic resins such as polypropylene (PP), polybutylene terephthalate (PBT), polycarbonate (PC), and Noryl (registered trademark) resin (modified PPE).

Separator 14 has a plurality of first insulating members 14a and a pair of second insulating members 14b. Each first insulating member 14a is disposed between two adjacent cells 12 to electrically insulate two cells 12. Second insulating members 14b extend in a stacking direction X of cells 12 and are fitted to side surfaces of cell stack 6. As a result, cells 12 and restraint member 10 are electrically insulated.

A plurality of partitions 14c are disposed in a stacking direction X of cells 12 on surfaces of second insulating members 14b facing cell stack 6. Spacing between adjacent partitions 14c corresponds to a dimension between the main surfaces of cells 12. When second insulating members 14b are fitted to the side surfaces of cell stack 6, partitions 14c are inserted between adjacent cells 12. As a result, cells 12 are positioned in stacking direction X.

The plurality of cells 12 stacked are sandwiched between a pair of end plates 8. The pair of end plates 8 are disposed at both ends of cell stack 6 in stacking direction X of cells 12. End plates 8 are made of, for example, metal plates. First insulating member 14a is also disposed between end plates 8 and cells 12 to insulate them.

Restraint member 10 is also called bind bar, and is an elongated members that are long in stacking direction X of cells 12. In the present exemplary embodiment, a pair of restraint members 10 are disposed in horizontal direction Y orthogonal to stacking direction X of cells 12, that is, in a direction in which positive terminals 20a and negative terminals 20b are aligned. Cell stack 6 and the pair of end plates 8 are disposed between the pair of restraint members 10. Each restraint member 10 has rectangular flat surface portion 10a parallel to the side surfaces of cell stack 6 and eaves portion 10b protruding from an upper side and a lower side of flat surface portion 10a to cell stack 6.

By engaging the pair of end plates 8 with flat surface portions 10a of restraint members 10, the plurality of cells 12 are sandwiched in stacking direction X. Contact plates 24 are fixed to surfaces of flat surface portions 10a facing end plates 8 by welding or the like. Contact plates 24 are members long in upper surface-bottom surface direction Z of cells 12, and have groove portions 24a on surfaces facing end plates 8. Through holes 24b are provided on bottom surfaces of the groove portions 24a to reach surfaces in contact with flat surface portions 10a of contact plates 24. In the present exemplary embodiment, three through holes 24b are disposed in each groove 24a at predetermined intervals left in upper surface-bottom surface direction Z of cells 12.

Flat surface portions 10a have through holes 11 at positions corresponding to through holes 24b of contact plates 24. End plates 8 have convex portions 8a long in upper surface-bottom surface direction Z of cells 12 on surfaces facing flat surface portions 10a. A shape of convex portions 8a corresponds to a shape of groove portions 24a. Convex portions 8a have fastening holes 8b at positions corresponding to through holes 24b of contact plates 24.

Restraint members 10 and end plates 8 are connected by fitting convex portions 8a into groove portions 24a. With convex portions 8a fitted into groove portions 24a, through holes 11 of restraint members 10, through holes 24b of contact plates 24, and fastening holes 8b of end plates 8 overlap one another. By inserting fastening members 26 such as screws, end plates 8 and restraint members 10 are fixed.

When a dimension of the cell stack 6 in stacking direction X increases due to expansion of cells 12, shearing force is applied to convex portions 8a. Further, force is applied to restraint members 10 in a direction in which their both ends are pulled. This suppresses the increase in the dimension of cell stack 6 and the expansion of cells 12. In general, metal has tensile strength stronger than bending strength. Therefore, for example, the expansion of cells 12 can be more reliably suppressed as compared with a structure in which both ends of restraint members 10 as viewed in stacking direction X are bent toward cell stack 6 and tips thereof are fixed to main surfaces of end plates 8.

Cell module 2 is fixed to fixing object 28 by fixing structure 4. Fixing object 28 is a cell pack housing, a vehicle body, or the like. Fixing structure 4 of cell module 2 includes fixing portions 30 and reduction mechanisms 32. Fixing portions 30 are connected to cell module 2 and fixing object 28. As a result, cell module 2 is fixed to fixing object 28. Fixing portions 30 of the present exemplary embodiment are connected to restraint members 10 of cell module 2.

More specifically, at both ends of each restraint member 10, fixing portions 30 protrude from a bottom surface side region of flat surface portion 10a and bottom surface side eaves portions 10b to the outside of end plate 8 as viewed in stacking direction X. Restraint members 10 and fixing portions 30 have an integral structure. Restraint members 10 and fixing portions 30 may have separate bodies.

Fixing portions 30 have connecting portions 30a to fixing object 28, which are disposed outside end plates 8 as viewed in stacking direction X. Connecting portion 30a of the present exemplary embodiment has through holes 31 through which fastening members (not shown) are inserted. Fixing object 28 have fastening holes (not shown), and the fastening holes and through holes 31 are overlapped with each other, and the fastening members are inserted into the overlapping holes to fix cell module 2 to fixing object 28. Connecting portions 30a may be fixed to fixing object 28 by another method such as welding.

Reduction mechanisms 32 are mechanisms for reducing the stress generated in fixing portions 30 due to a dimensional change of cells 12. In the present exemplary embodiment, cell module 2 has a substantially rectangular parallelepiped shape, and reduction mechanisms 32 have a structure in which fixing portions 30 are disposed at corner portions C of cell module 2.

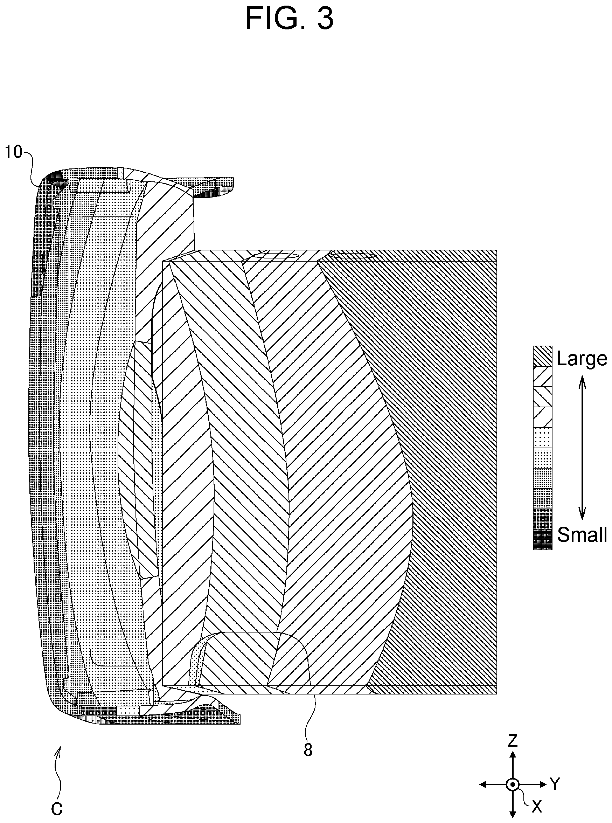

FIG. 3 is a diagram showing results of calculation, by simulation, of distribution of stress generated in an end plate and a bind bar due to expansion of cells. The distribution of stress generated in the end plates and bind bars is the same between two regions divided in the center as viewed in horizontal direction Y. Therefore, FIG. 3 shows the stress distribution in one region.

As shown in FIG. 3, the stress generated by the expansion of cells 12 is the largest at the central portion of end plate 8 as viewed in horizontal direction Y, and gradually decreases with increasing proximity to the outer side, that is, to restraint member 10. Therefore, by disposing fixing portions 30 at corner portions C where the stress applied to end plates 8 and restraint members 10 is small, the stress applied to fixing portions 30 can be reduced. That is, the stress generated in fixing portions 30 due to a dimensional change of cells 12 can be reduced.

Reduction mechanisms 32 also include a structure in which fixing portions 30 are disposed at coupling portions 33 of end plates 8 and restraint members 10 at corner portions C of cell module 2. Coupling portions 33 are regions that include portions where convex portions 8a of end plates 8, contact plates 24, and restraint members 10 are engaged with one another. Further, in the present exemplary embodiment, fixing portions 30 are connected to restraint members 10 at coupling portions 33. That is, fixing portions 30 are connected to cell module 2 at outer edges of corner portions C of cell module 2 under smaller stress.

Connecting portions 30a of fixing portions 30 connected to fixing object 28 protrude more outside than end plates 8 as viewed in stacking direction X. Connecting portions 30a are disposed inside flat surface portions 10a of restraint members 10 as viewed in horizontal direction Y. As a result, when disposing a plurality of cell modules 2 on fixing object 28, a distance between adjacent cell modules 2 as viewed in horizontal direction Y can be reduced. Therefore, it is possible to improve space efficiency when installing the plurality of cell modules 2.

As described above, fixing structure 4 of cell module 2 according to the present exemplary embodiment includes: fixing portions 30 that are connected to cell module 2 and fixing object 28, thereby fixing cell module 2 to fixing object 28; and reduction mechanisms 32 that reduce the stress generated in fixing portions 30 due to a dimensional change of cells 12.

In general, a cell module can change in dimensions due to expansion of cells. That is, the end plates and the restraint members can become deformed. When the dimensions of the cell module change, the cell module fixing structure is put under a load. In particular, in recent years, further increase in capacity of cell modules has been required, and in order to meet this demand, each cell has become higher in capacity and the number of stacked cells has been increasing. Along with this, the amount of dimensional change of cell modules tends to increase. When the dimensional change of a cell module becomes large, the load applied to the cell module fixing structure also becomes large, which makes it difficult to stably fix the cell module. If the load applied to the fixing structure of the cell module becomes extremely large, the fixing structure may be broken. As a result, the reliability of the power supply device including the cell module may become deteriorated.

On the other hand, fixing structure 4 of the present exemplary embodiment includes reduction mechanisms 32 that reduce the load applied to fixing portions 30. Accordingly, cell module 2 can be fixed more stably. As a result, the reliability of power supply device 1 can be improved.

As a method of reducing the load applied to the fixing structure and stably fixing the cell module, it is contemplated that the end plates and the restraint members are made to have a stronger structure so as to suppress the expansion of the cells thereby reducing the dimensional change of the cell module. However, this method causes the end plates and the restraint members to increase in size, which leads to upsizing of the cell module. Since this upsizing is not based on an increase in capacity such as an increase in the number of cells stacked, it is desired to avoid this upsizing as much as possible.

On the other hand, reduction mechanism 32 of the present exemplary embodiment includes a structure in which fixing portions 30 are disposed at corner portions C of cell module 2. At corner portions C of cell module 2, the stress applied to end plates 8 and restraint members 10 due to the expansion of cells 12 is smaller than in the other regions. That is, end plates 8 and restraint members 10 have a small amount of deformation at corner portions C. Therefore, the load applied to fixing portions 30 can be reduced by connecting fixing portions 30 to regions including corner portions C, in other words, ridgeline portions composed of end plates 8 and restraint members 10.

Reduction mechanisms 32 also include a structure in which fixing portions 30 are disposed at coupling portions 33 of end plates 8 and restraint members 10. This further reduces the load applied to fixing portions 30. In the present exemplary embodiment, fixing portions 30 are connected to restraint members 10. This further reduces the load applied to fixing portions 30.

When fixing object 28 is a vehicle or the like, vibration on a side of fixing object 28 is input to power supply device 1. Due to this vibration, rotational moment around an axis extending in stacking direction X is likely to be generated on cell module 2. On the other hand, the generation of the rotational moment can be further suppressed by connecting fixing portions 30 to restraint members 10 located on the outermost side as viewed in horizontal direction Y. Accordingly, cell module 2 can be fixed more stably.

In the present exemplary embodiment, connecting portions 30a of fixing portions 30 to fixing object 28 are disposed outside end plates 8 in stacking direction X. This further decreases the stress generated on fixing portions 30.

### (Second exemplary embodiment)

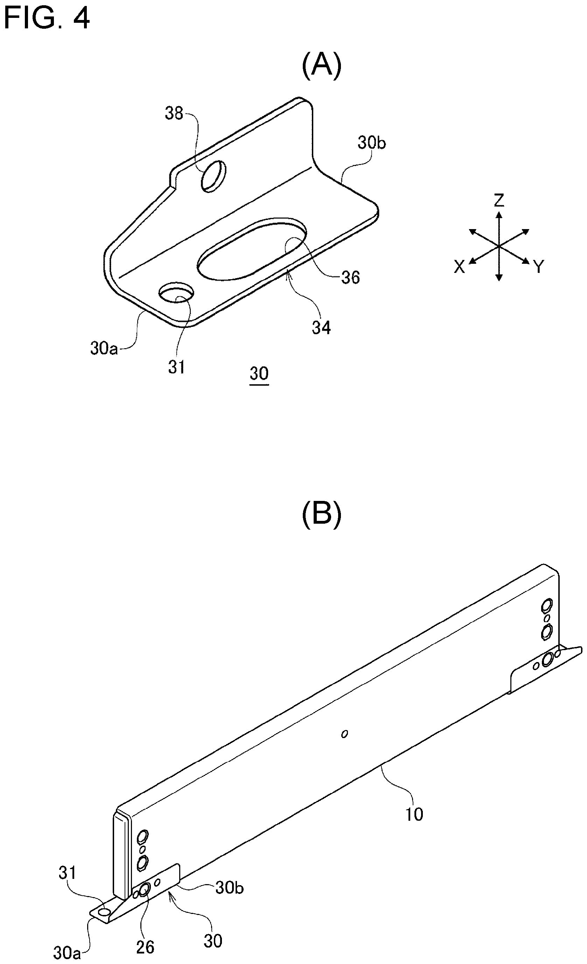

A second exemplary embodiment has the same configuration as the first exemplary embodiment except that fixing structure 4 of cell module 2 is different. Hereinafter, the present exemplary embodiment will be described focusing on a configuration different from that of the first exemplary embodiment, and the common configuration will be briefly described or will not be described. FIG. 4(A) is a perspective view of a fixing portion included in a fixing structure according to the second exemplary embodiment. FIG. 4(B) is a perspective view showing a state in which the fixing portion according to the second exemplary embodiment is connected to the restraint member.

In fixing structure 4 of the present exemplary embodiment, fixing portion 30 has deformation portion 34 that gets deformed under force generated due to a dimensional change of cells 12. Deformation portion 34 of the present exemplary embodiment has through hole 36 disposed between connecting portion 30a to fixing object 28 and connecting portion 30b to cell module 2. Reduction mechanism 32 includes deformation portion 34.

That is, with deformation portion 34 having through hole 36, an area of a cross section of fixing portion 30 orthogonal to stacking direction X is smaller in deformation portion 34 than in connecting portion 30a and connecting portion 30b. Therefore, rigidity of fixing portion 30 is reduced at deformation portion 34. Therefore, when the stress applied to end plates 8 and restraint members 10 is transferred to fixing portions 30 due to the expansion of cells 12, the shape of deformation portions 34 changes. That is, the stress generated on fixing portions 30 can be absorbed by deformation portions 34. This further reduces the stress generated on fixing portions 30. This also reduces transfer of stress from connecting portions 30b to connecting portions 30a.

As in the first exemplary embodiment, reduction mechanisms 32 include a structure in which fixing portions 30 are disposed at both ends of restraint members 10. Therefore, fixing portions 30 are disposed at corner portions C of cell module 2. Combining the structures with deformation portions 34 further reduces the stress applied to fixing portions 30.

Connecting portions 30a are fixed to fixing object 28 by inserting fastening members into through holes 31. On the other hand, connecting portions 30b are joined to restraint members 10 by welding or the like. Fixing portion 30 has through hole 38 through which fastening member 26 is inserted. In the present exemplary embodiment, fixing portions 30 are separate from restraint members 10, but may be integrated with restraint members 10 as in the first exemplary embodiment.

### (Third exemplary embodiment)

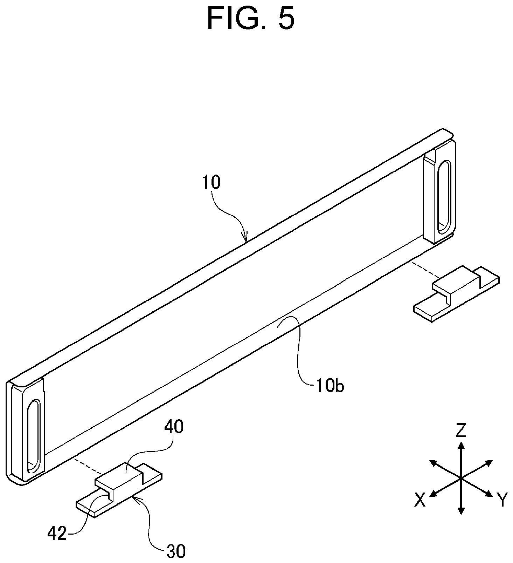

A third exemplary embodiment has the same configuration as the first exemplary embodiment except that fixing structure 4 of cell module 2 is different. Hereinafter, the present exemplary embodiment will be described focusing on a configuration different from that of the first exemplary embodiment, and the common configuration will be briefly described or will not be described. FIG. 5 is a perspective view of a fixing portions included in a fixing structure according to the third exemplary embodiment.

In the present exemplary embodiment, fixing portion 30 has support portion 40 that supports cell module 2 so as to be displaceable in stacking direction X. Support portion 40 of the present exemplary embodiment has a rail structure with groove 42 extending in stacking direction X, and eaves portion 10b located on the bottom surface side of cell stack 6 is inserted into groove 42. As a result, support portion 40 can support eaves portion 10b so as to be slidable in stacking direction X. Fixing structure 4 of the present exemplary embodiment has four fixing portions 30, and fixing portions 30 are disposed at four corners of cell module 2.

Fixing portions 30 regulate displacement of cell stack 6 in horizontal direction Y and top surface-bottom surface direction Z, and allow the displacement of cell stack 6 in stacking direction X. Fixing portions 30 are connected to fixing object 28 by fastening with fastening members, welding, or the like. Reduction mechanisms 32 include support portions 40.

That is, by hooking eaves portions 10b on support portions 40, it is possible to fix cell module 2 to fixing object 28 while allowing cell module 2 to be displaced in stacking direction X. Thus, the stress generated in fixing portions 30 due to a dimensional change of cells 12 can be reduced. As in the first exemplary embodiment, reduction mechanisms 32 include a structure in which fixing portions 30 are disposed at both ends of restraint members 10. Therefore, fixing portions 30 are disposed at corner portions C of cell module 2. Combining the structures with support portions 40 further reduces the stress applied to fixing portions 30.

The exemplary embodiments of the present invention have been described in detail above. The above-described exemplary embodiments merely show specific examples in carrying out the present invention. The contents of the exemplary embodiments do not limit the technical scope of the present invention, and many design changes such as modification, addition, and deletion of components can be made without departing from the idea of the invention defined in the claims. A new embodiment with such design changes has respective effects of the combined exemplary embodiment and modification. In the above-described exemplary embodiments, the contents capable of such design changes are emphasized by adding notations such as "of the present exemplary embodiment" and "in the present exemplary embodiment", but the contents without such notations are allowed for design changes as well. Any combination of the above components is also effective as a mode of the present invention. The hatching attached to the cross sections of the drawings does not limit the material of the target to which the hatching is attached.

The exemplary embodiments may be specified by the items described below.

### [Item 1]

Power supply device (1) including: cell module (2) that has cell stack (6) with a plurality of cells (12) stacked, a pair of end plates (8) disposed at both ends of cell stack (6) as viewed in stacking direction (X) of cells (12), and restraint member (10) engaging with the pair of end plates (8) to sandwich the plurality of cells (12); and fixing structure (4) that has fixing portion (30) fixing cell module (2) to fixing object (28) to which cell module (2) is to be fixed, and reduction mechanism (32) reducing a stress generated on fixing portion (30) due to a dimensional change of cells (12).

### REFERENCE MARKS IN THE DRAWINGS

- 2: cell module
- 4: fixing structure
- 6: cell stack
- 8: end plate
- 10: restraint member
- 12: cell
- 28: fixing object
- 30: fixing portion
- 30a, 30b: connection portion
- 32: reduction mechanism
- 33: coupling portion
- 34: deformation portion
- 40: support portion
- C: corner portion

## Claims

1. A fixing structure of a cell module, the cell module including a cell stack that has a plurality of cells stacked, a pair of end plates disposed at both ends of the cell stack as viewed in a stacking direction of the cells, and a restraint member engaging with the pair of end plates to sandwich the plurality of cells, the fixing structure comprising:
a fixing part that fixes the cell module to a fixing object to which the cell module is to be fixed; and
a reduction mechanism that reduces a stress generated on the fixing part due to a dimensional change of the cells.

2. The fixing structure of the cell module according to claim 1, wherein
the cell module has a rectangular parallelepiped shape, and
the reduction mechanism includes a structure in which the fixing part is disposed at a corner portion of the cell module.

3. The fixing structure of the cell module according to claim 2, wherein the reduction mechanism includes a structure in which the fixing part is disposed at an coupling portion of the end plates and the restraint member.

4. The fixing structure of the cell module according to claim 3, wherein the fixing part is connected to the restraint member.

5. The fixing structure of the cell module according to any one of claims 2 to 4, wherein a connecting portion of the fixing part to the fixing object is disposed more outside than the end plates as viewed in the stacking direction.

6. The fixing structure of the cell module according to any one of claims 1 to 5, wherein
the fixing part has a deformation part that gets deformed under force generated by a dimensional change of the cells, and
the reduction mechanism includes the deformation part.

7. The fixing structure of the cell module according to any one of claims 1 to 5, wherein
the fixing part has a support part that supports the cell module so as to be displaceable in the stacking direction, and
the reduction mechanism includes the support part.
